# EUROPEAN PATENT APPLICATION

(11) **EP 3 007 417 A1**
(43) Date of publication of application: **13.04.2016**
(21) Application number: 14803899.5
(22) Date of filing: 14.04.2014
(51) Int. Cl.: H04M 1/65

(54) **METHOD AND RESIDENTIAL GATEWAY FOR REALIZING VOICE MESSAGE FUNCTION**

(30) Priority: 27.05.2013 CN 201310201925
(71) Applicant: ZTE Corporation, Shenzhen, Guangdong 518057 (CN)
(72) Inventor: CHEN, Peng, Shenzhen Guangdong 518057 (CN); WANG, Xinyu, Shenzhen Guangdong 518057 (CN); ZHANG, Penggang, Shenzhen Guangdong 518057 (CN)
(74) Representative: Awapatent AB
(86) International application number: PCT/CN2014/075289
(87) International publication number: WO 2014/190816

(57) **Abstract**

Disclosed are a method and home gateway for realizing voice message function, wherein the method includes: when a called party in a voice call does not answer within a preset time period, a home gateway entering into a message state; performing a message processing operation according to the calling party's needs to obtain the message information; when the called party picks up the phone, performing a corresponding operation on the message information according to the called party's needs. The embodiment of the present invention utilizes a home gateway to receive and store the message information of a calling party, and extracts and plays the stored message information when a called party picks up the phone, thus realizing the voice message function without the user purchasing an extra messaging phone or specifically starting the voice message function of a core network; that is, realizing the voice message function without increasing extra cost to the user, and also bringing great convenience to the user.

## Description

### Technical Field

The present invention relates to the field of communication technologies, and more particularly, to a method and home gateway for realizing voice message function.

### Background of the Related Art

With the development of communication technology, the phone develops gradually to be digital and intelligent, and functions provided by it are increasingly rich, wherein the voice message function is a useful function in a lot of phone functions, and it enables users to listen to the important message information of the incoming call at a later time in the case that they miss important incoming calls.

At present, there are usually the following two methods for realizing the voice message function:
(1) the voice message function is realized through a dedicated messaging phone or recording phone, but the majority of users are using ordinary phones, and if they need the voice message function, they have to purchase an extra messaging phone or recording phone, thus the cost is too high.
(2) currently, in the Next Generation Network (NGN network), the core network can be used to realize the voice message function, but in the method, the user is required to specifically start that function, bringing the user extra expenses.

### Summary of the Invention

The main object of the present invention is to provide a method and home gateway for realizing voice message function, to realize the voice message function in the condition of not adding the extra cost to a user.

To achieve the abovementioned object, the present invention provides a method for realizing voice message function, comprising:
when a called party in a voice call does not answer within a preset time period, a home gateway entering into a message state;
performing a message processing operation to obtain message information according to needs of a calling party;
performing a corresponding operation on the message information according to needs of the called party when the called party picks up a phone.

Preferably, the step of performing a message processing operation to obtain message information according to needs of a calling party comprises:
sending voice prompt information to the calling party for the calling party to choose whether to leave a voice message or not;
when the calling party chooses to leave a voice message according to the voice prompt message, receiving message information of the calling party and storing the message information in a home gateway.

Preferably, the step of performing a corresponding operation on the message information according to needs of the called party comprises:
analyzing whether there is message information stored in the home gateway or not;
when it is determined that there is message information stored in the home gateway, sending prompt information to the called party for the called party to choose whether to listen to the message information or not;
when the called party chooses to listen to the message information according to the prompt information, extracting the message information stored in the home gateway and plays the message information.

Preferably, before the step of when a called party in a voice call does not answer within a preset time period, a home gateway entering into a message state, the method further comprises:
starting a voice message function of the home gateway.

Preferably, the method further comprises:
obtaining identity information of a user who leaves a message matching with the message information according to an Internet phone caller ID display function of the home gateway.

The present invention further provides a home gateway for realizing voice message function, comprising:
an entering into message module, configured to: when a called party in a voice call does not answer within a preset time period, enter into a message state;
an obtaining module, configured to: perform a message processing operation to obtaining message information according to needs of a calling party;
a processing module, configured to: when the called party picks up a phone, perform a corresponding operation on the message information according to needs of the called party.

Preferably, the obtaining module comprises:
a first sending unit, configured to: send voice prompt information to the calling party for the calling party to choose whether to leave a voice message or not;
a receiving and storing unit, configured to: when the calling party chooses to leave a voice message according to the voice prompt information, receive message information of the calling party and store the message information in a home gateway.

Preferably, the processing module comprises:
an analyzing unit, configured to: analyze whether there is message information stored in the home gateway or not;
a second sending unit, configured to: when it is determined that there is message information stored in the home gateway, send prompt information to the called party for the called party to choose whether to listen to the message information or not;
an extracting and playing unit, configured to: when the called party chooses to listen to the message information according to the prompt information, extract the message information stored in the home gateway and play the message information.

Preferably, before the entering into message module, it further comprises:
a starting module, configured to: start a voice message function of the home gateway.

Preferably, it further comprises:
an obtaining module being further configured to: obtain identity information of a user who leaves a message matching with the message information according to an Internet phone caller ID display function of the home gateway.

The method and home gateway for realizing voice message function provided in the embodiment of the present invention use the home gateway to receive and store the message information of the calling party when the called party does not answer within a preset time period, and extract and play the stored message information when the called party picks up the phone, so as to realize the voice message function without a user purchasing an extra messaging phone or specifically starting the voice message function of the core network, that is, so as to realize the voice message function without increasing the extra cost to the user and bring the user great convenience.

### Brief Description of Drawings

FIG. 1 is a flow chart of a first embodiment of a method for achieving voice message function in accordance with the present invention;
FIG. 2 is a flow chart of performing a message processing operation to obtain message information according to a calling party's needs in the first embodiment of the method for realizing voice message function in accordance with the present invention;
FIG. 3 is a flow chart of performing a corresponding operation on message information according to a called party's needs in the first embodiment of the method for realizing voice message function in accordance with the present invention;
FIG. 4 is a flow chart of a second embodiment of the method for realizing voice message function in accordance with the present invention;
FIG. 5 is a structural diagram of a first embodiment of a home gateway for realizing voice message function in accordance with the present invention;
FIG. 6 is a structural diagram of an obtaining module in the first embodiment of the home gateway for realizing voice message function in accordance with the present invention;
FIG. 7 is a structural diagram of a processing module in the first embodiment of the home gateway for realizing voice message function in accordance with the present invention;
FIG. 8 is a structural diagram of a second embodiment of the home gateway for realizing voice message function in accordance with the present invention.

Hereinafter, it will be described in further detail in conjunction with the accompanying drawings.

### Preferred Embodiments of the Invention

The solution according to the embodiment of the present invention is mainly: using a home gateway to receive and store the message information of the calling party when the called party does not answer within a preset time period, and extracting and playing the stored message information when the called party picks up the phone, thus realizing the voice message function.

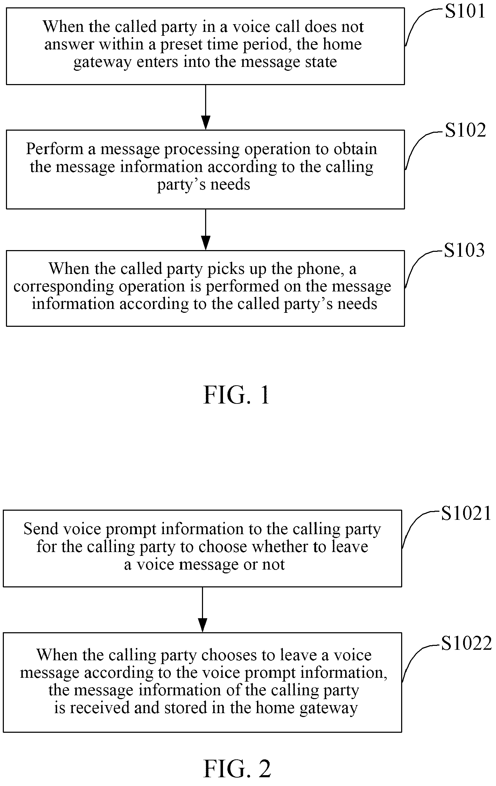

As shown in FIG. 1, the first embodiment of the present invention provides a method for realizing voice message function, comprising:
in step S101, when the called party in a voice call does not answer within a preset time period, the home gateway enters into the message state;

Now, with the advent of the age of information intelligence, the home gateway, as a bridge connected between the home intelligent device and the Internet service, has rapidly been popularized and gradually deepened in millions of households. The home gateway provides flexible external access interfaces, including: ADSL, VDSL, LAN, EPON, GPON, USB, etc; it can provide rich internal service functions, including: wired Internet access, wireless Internet access, IPTV, VoIP, etc, and therefore, the home gateway as the future multimedia center within the home, has a lot of functions.

The present embodiment uses the voice media processing function of the home gateway to realize the voice message function of the phone.

In the present embodiment, when the user of the home gateway works as the called party and does not answer within a preset time period in a voice call, namely it is considered that the user is not near to the phone and there is a need to perform an operation of leaving a message, the home gateway enters into the message state and prepares for performing the message processing operation. The preset time period in the present embodiment is set according to the actual situation, for example, it can be set according to the user's operating habits, and the value of the preset time period will not be limited in the present embodiment.

In step S102, it is to perform a message processing operation to obtain the message information according to the calling party's needs;
when entering into the message state, the home gateway uses the voice media processing function of the home gateway to send the voice prompt information to the calling party, and the voice prompt information can be a voice media, prompting the calling party to choose to leave a voice message after performing a specific operation currently. When the calling party performs the specific operation, namely choosing to leave a voice message, according to the calling party's needs and the voice prompt information, the home gateway starts to record and receive the message information of the calling party and store it in the home gateway. All available space of the home gateway is used to store the message information, including but not limited to the following storage manners: memory, flash, USB and other external storage devices.

Step S103, when the called party picks up the phone, it is to perform a corresponding operation on the message information according to the called party's needs.

When the called party, namely the user, picks up the phone, it is to analyze whether there is message information stored in the home gateway or not, and if no, it is to enter into the ordinary voice call process; if it is determined that there is message information stored in the home gateway, then it is to use the voice media processing function of the home gateway to send prompt information to the user, wherein the prompt information may be a voice media, prompting the user that he/she can choose to listen to the message information after performing a specific operation currently. When the user performs the specific operation, namely choosing to listen to the message information, according to the needs and the prompt information, it is to extract the message information stored in the home gateway and play the message information to enable the user to obtain the message information of an important missing call. The user can also obtain the identity information of the user who leaves a message matching with the message information according to the internet phone caller ID display function of the home gateway, to facilitate the user to identify the message information according to the identity information of the user who leaves the message, thus greatly improving the user experience.

Specifically, as shown in FIG. 2, the abovementioned step S102 may comprise:
in step S1021, it is to send the voice prompt information to the calling party for the calling party to choose whether to leave a voice message or not;
in step S1022, when the calling party chooses to leave a voice message according to the voice prompt information, it is to receive the message information of the calling party and store the message information in the home gateway.

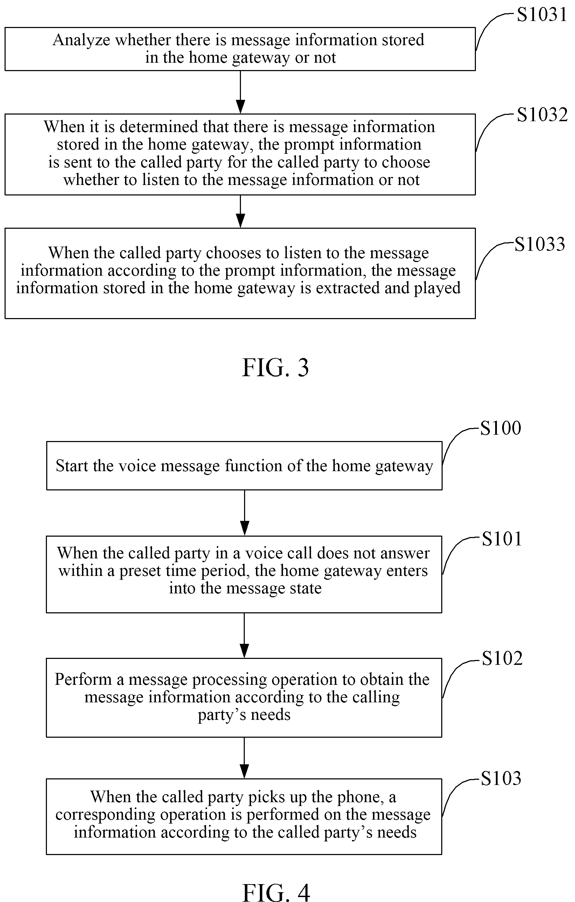

As shown in FIG. 3, the abovementioned step S103 may comprise:
in step S1031, it is to analyze whether there is message information stored in the home gateway or not;
in step S1032, when it is determined that there is message information stored in the home gateway, it is to send prompt information to the called party for the called party to choose whether to listen to the message information or not;
in step S1033, when the called party chooses to listen to the message information according to the prompt information, it is to extract the message information stored in the home gateway and play the message information.

In the method for realizing voice message function provided in the present embodiment, it uses a home gateway to receive and store message information of the calling party when the called party does not answer within a preset time period, and it extracts and plays the stored message information when the called party picks up the phone, thus realizing the voice message function without a user purchasing an extra messaging phone or specifically starting the voice message function of the core network, that is, using the home gateway to realize the voice message function without increasing extra costs to the user, thus bringing the user great convenience.

As shown in FIG. 4, the second embodiment of the present invention provides a method for realizing voice message function, on the basis of the first embodiment, before the abovementioned step S101, it further comprises:
in step S100, it is to start the voice message function of the home gateway.

The difference between the present embodiment and the first embodiment is that the present embodiment further comprises the operation of starting the voice message function of the home gateway.

When in use, the user can choose whether to start the voice message function of the home gateway according to his/her own needs, and the user can shut down the voice message function of the home gateway when the user does not need to use the voice message function of the home gateway, and all voice calls are processed through the ordinary voice call process, and then the function can be started again when the user needs the function. The method for the user starting or shutting down the voice message function of the home gateway comprises but not limited to the following ways: hardware switch, webpage, network management and so on.

The present embodiment, through the abovementioned solution, not only can use the home gateway to achieve the voice message function in the condition of not increasing extra costs to the user and thus bringing the user great convenience, but also it makes the user choose to start or shut down the voice message function of the home gateway according to needs, which is more humane and further provides the user with convenience.

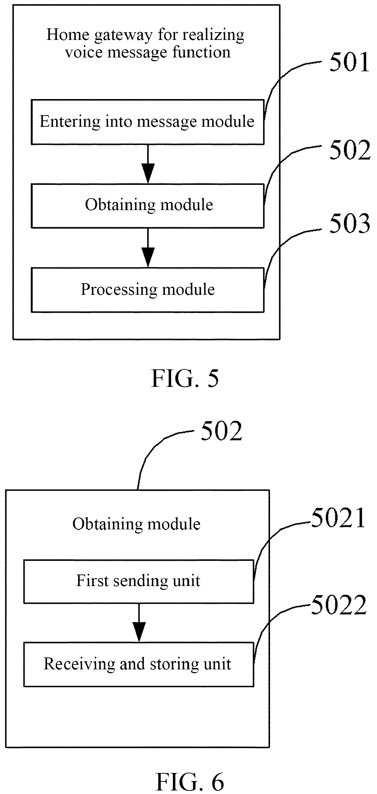

As shown in FIG. 5, the first embodiment of the present invention provides a home gateway for realizing voice message function, comprising: an entering into message module 501, an obtaining module 502 and a processing module 503, wherein:
the entering into message module 501 is used for the home gateway entering into the message state when the called party in a voice call does not answer within a preset time period;
currently, with the advent of the age of information intelligence, the home gateway, as a bridge connected between the home intelligent device and the Internet service, has rapidly been popularized and gradually deepened in millions of households. The home gateway provides flexible external access interfaces, including: ADSL, VDSL, LAN, EPON, GPON, USB, etc; it can provide rich internal service functions, including: wired Internet access, wireless Internet access, IPTV, VoIP, etc, and therefore, the home gateway as the future multimedia center within the home, has a lot of functions.

The present embodiment uses the voice media processing function of the home gateway to realize the voice message function of the phone.

In the present embodiment, when the user of the home gateway works as the called party and does not answer within a preset time period in a voice call, namely it is considered that the user is not near to the phone and there is a need to perform an operation of leaving a message, the home gateway enters into the message state and is ready for performing a message processing operation. In the present embodiment, the preset time period is set according to the actual situation, for example, it can be set according to the user's operating habits, and the value of the preset time period will not be limited in the present embodiment.

The obtaining module 502 is used for performing a message processing operation to obtain the message information according to the calling party's needs;
when entering into the message state, the home gateway uses the voice media processing function of the home gateway to send the voice prompt information to the calling party, and the voice prompt information can be a voice media, prompting the calling party to choose to leave a voice message after performing a specific operation currently. When the calling party performs the specific operation, namely choosing to leave a voice message, according to the calling party's needs and the voice prompt information, the home gateway starts to record and receive the message information of the calling party and store it in the home gateway. All available space of the home gateway is used to store the message information, including but not limited to the following storage manners: memory, flash, USB and other external storage devices.

The processing module 503 is used for, when the called party picks up the phone, performing a corresponding operation on the message information according to the called party's needs.

When the called party, namely the user, picks up the phone, it is to analyze whether there is message information stored in the home gateway or not, and if no, it is to enter into the ordinary voice call process; if it is determined that there is message information stored in the home gateway, then it is to use the voice media processing function of the home gateway to send prompt information to the user, wherein the prompt information may be a voice media, prompting the user that he/she can choose to listen to the message information after performing a specific operation currently. When the user performs the specific operation, namely choosing to listen to the message information, according to the needs and the prompt information, it is to extract the message information stored in the home gateway and play the message information to enable the user to obtain the message information of an important missing call. The user can also obtain the identity information of the user who leaves a message matching with the message information according to the internet phone caller ID display function of the home gateway, to facilitate the user to identify the message information according to the identity information of the user who leaves the message, thus greatly improving the user experience.

Specifically, as shown in FIG. 6, the obtaining module 502 may include: a first sending unit 5021 and a receiving and storing unit 5022, wherein:
the first sending unit 5021 is used for sending the voice prompt information to the calling party for the calling party to choose whether to leave a voice message or not;
the receiving and storing unit 5022 is used for, when the calling party selects to leave a voice message according to the voice prompt information, receiving the message information of the calling party and storing the message information in the home gateway.

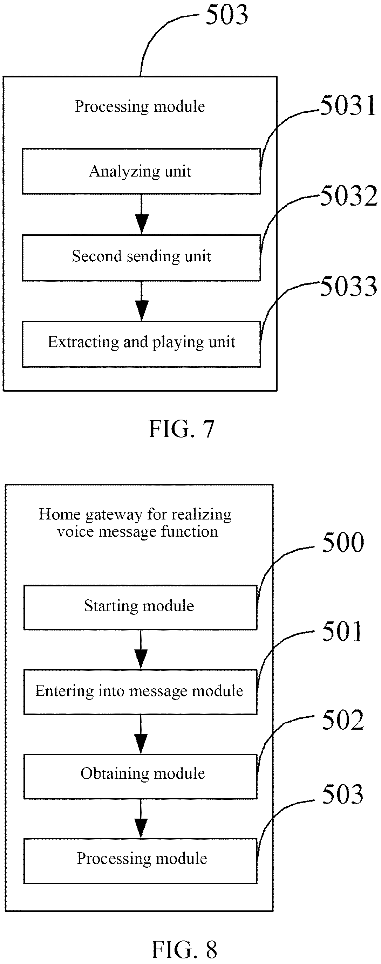

As Shown in FIG. 7, the processing module 503 may comprise: an analyzing unit 5031, a second sending unit 5032 and an extracting and playing unit 5033, wherein:
the analyzing unit 5031 is used to analyze whether there is message information stored in the home gateway or not;
the second sending unit 5032 is used to: when it is determined that there is message information stored in the home gateway, send prompt information to the called party for the called party to choose whether to listen to the message information or not;
the extracting and playing unit 5033 is used to: extract the message information stored in the home gateway and play the message information when the called party chooses to listen to the message information according to the prompt information.

For the home gateway for realizing voice message function provided in the present embodiment, it uses a home gateway to receive and store message information of the calling party when the called party does not answer within a preset time period, and it extracts and plays the stored message information when the called party picks up the phone, thus realizing the voice message function without a user purchasing an extra messaging phone or specifically starting the voice message function of the core network, that is, using the home gateway to realize the voice message function without increasing extra costs to the user, thus bringing the user great convenience.

As shown in FIG. 8, the second embodiment of the present invention provides a home gateway for realizing voice message function, which, on the basis of the abovementioned first embodiment, further comprises:
a starting module 500, used to start the voice message function of the home gateway.

The difference between the present embodiment and the first embodiment is that the present embodiment further comprises the operation of starting the voice message function of the home gateway.

When in use, the user can choose whether to start the voice message function of the home gateway according to his/her own needs, and the user can shut down the voice message function of the home gateway when the user does not need to use the voice message function of the home gateway, and all voice calls are processed through the ordinary voice call process, and then the function can be started again when the user needs the function. The method for the user starting or shutting down the voice message function of the home gateway comprises but not limited to the following ways: hardware switch, webpage, network management and so on.

The present embodiment, through the above solution, not only can use the home gateway to realize the voice message function without increasing extra costs to the user, thus bringing the user great convenience, but also make the user choose to start or shut down the voice message function of the home gateway according to needs, which is more humane and further provides the user with convenience.

The method and home gateway for realizing voice message function provided in the present invention, use the home gateway to receive and store the message information of the calling party when the called party does not answer within a preset time period, and extract and play the stored message information when the called party picks up the phone, so as to realize the voice message function without a user purchasing an extra messaging phone or specifically starting the voice message function of the core network, that is, so as to use the home gateway to realize the voice message function without increasing extra costs to the user, thus bringing the user great convenience.

The above is only preferred embodiments of the present invention, and it is not intended to limit the claims of the present invention, any equivalent structures or equivalent transformation processes made by using the contents of the specification and the drawings of the present invention, directly or indirectly used in other related fields of technologies, should be similarly included within the protection scope of the present invention.

### Industrial Applicability

The method and home gateway for realizing voice message function provided in the embodiment of the present invention use the home gateway to receive and store the message information of the calling party when the called party does not answer within a preset time period, and extract and play the stored message information when the called party picks up the phone, so as to realize the voice message function without a user purchasing an extra messaging phone or specifically starting the voice message function of the core network, that is, so as to realize the voice message function without increasing the extra cost to the user and bring the user great convenience.

## Claims

1. A method for realizing voice message function, comprising:
when a called party in a voice call does not answer within a preset time period, a home gateway entering into a message state;
performing a message processing operation to obtain message information according to needs of a calling party;
performing a corresponding operation on the message information according to needs of the called party when the called party picks up a phone.

2. The method of claim 1, wherein the step of performing a message processing operation to obtain message information according to needs of a calling party comprises:
sending voice prompt information to the calling party for the calling party to choose whether to leave a voice message or not;
when the calling party chooses to leave a voice message according to the voice prompt information, receiving message information of the calling party and storing the message information in a home gateway.

3. The method of claim 2, wherein the step of performing a corresponding operation on the message information according to needs of the called party comprises:
analyzing whether there is message information stored in the home gateway or not;
when that there is message information stored in the home gateway is determined, sending prompt information to the called party for the called party to choose whether to listen to the message information or not;
when the called party chooses to listen to the message information according to the prompt information, extracting the message information stored in the home gateway and plays the message information.

4. The method of claim 1, 2 or 3, wherein, before the step of when a called party in a voice call does not answer within a preset time period, a home gateway entering into a message state, the method further comprises:
starting a voice message function of the home gateway.

5. The method of claim 2 or 3, wherein, the method further comprises:
obtaining identity information of a user who leaves a message matching with the message information according to an Internet phone caller ID display function of the home gateway.

6. A home gateway for realizing voice message function, comprising:
an entering into message module, configured to: when a called party in a voice call does not answer within a preset time period, enter into a message state;
an obtaining module, configured to: perform a message processing operation to obtain message information according to needs of a calling party;
a processing module, configured to: when the called party picks up a phone, perform a corresponding operation on the message information according to needs of the called party.

7. The home gateway of claim 6, wherein the obtaining module comprises:
a first sending unit, configured to: send voice prompt information to the calling party for the calling party to choose whether to leave a voice message or not;
a receiving and storing unit, configured to: when the calling party chooses to leave a voice message according to the voice prompt information, receive message information of the calling party and store the message information in a home gateway.

8. The home gateway of claim 7, wherein, the processing module comprises:
an analyzing unit, configured to: analyze whether there is message information stored in the home gateway or not;
a second sending unit, configured to: when that there is message information stored in the home gateway is determined, send prompt information to the called party for the called party to choose whether to listen to the message information or not;
an extracting and playing unit, configured to: when the called party chooses to listen to the message information according to the prompt information, extract the message information stored in the home gateway and play the message information.

9. The home gateway of claim 6, 7 or 8, wherein, before the entering into message module, the home gateway further comprises:
a starting module, configured to: start a voice message function of the home gateway.

10. The home gateway of claim 7 or 8, wherein, the home gateway further comprises:
the obtaining module being further configured to: obtain identity information of a user who leaves a message matching with the message information according to an Internet phone caller ID display function of the home gateway.
